# FASCICULE DE BREVET EUROPEEN

(11) **EP 2 263 014 B1**
(45) Date de publication et mention de la délivrance du brevet: **09.10.2013**
(21) Numéro de dépôt: 09718017.8
(22) Date de dépôt: 05.02.2009
(51) Int. Cl.: F16B 19/10, B60N 3/02, B60R 13/02

(54) **DISPOSITIF DE FIXATION D'UN ELEMENT D'ASSEMBLAGE D'UN ACCESSOIRE SUR UNE PLAQUE DE SUPPORT**
.
DEVICE FOR ATTACHING AN ASSEMBLING MEMBER OF AN ACCESSORY TO A BEARING PLATE

(30) Priorité: 07.03.2008 FR 0801269
(43) Date de publication de la demande: 22.12.2010
(73) Titulaire: A. Raymond et Cie., 38000 Grenoble (FR)
(72) Inventeur: COCHARD, Mathieu, F-38700 La Tronche (FR)
(74) Mandataire: RACKETTE Partnerschaft Patentanwälte
(86) Numéro de dépôt international: PCT/EP2009/000774
(87) Numéro de publication internationale: WO 2009/109269

(56) Documents cités:
- EP-A- 0 743 461
- EP-A- 1 186 787
- US-A1- 2006 066 080

## Description

### Domaine technique de l'invention

L'invention est relative à un dispositif de fixation d'un élément d'assemblage d'un accessoire sur une plaque de support, comprenant :
- une agrafe en forme de U avec une base munie d'une lumière et deux branches sensiblement parallèles, ladite agrafe comportant des moyens de retenue de l'élément d'assemblage et chaque branche comprenant une lame élastiquement repoussée dans une direction transversale du côté opposé à la branche opposée, après un engagement axial des branches dans une ouverture de la plaque de support, pour venir en prise avec la plaque de support et assurer un clippage de l'agrafe,
- et une goupille de verrouillage ayant une tête et un corps allongé insérable axialement entre les branches de l'agrafe au travers de la lumière, pour empêcher le rapprochement des branches et bloquer l'agrafe en position clippée.

### État de la technique

Un tel dispositif de fixation est susceptible de très nombreuses applications, notamment dans le domaine de l'automobile, où il peut servir au montage d'accessoires tels que des poignées de maintien, des pare-soleil, des agrafes de pare-soleil, des systèmes d'éclairage, sur le toit d'un véhicule automobile.

Le pavillon de toit d'un véhicule automobile comporte une garniture de pavillon qui est plaquée contre le toit, et qui assure la finition. Lorsqu'un accessoire doit être monté, il convient de le fixer sur des pièces métalliques solidaires du toit, en traversant la garniture de pavillon.

Le document EP0743461 concerne un dispositif de fixation dans lequel un accessoire est équipé d'une goupille de verrouillage. Le dispositif comprend en outre une agrafe destinée à être engagée dans une ouverture de la plaque de support afin d'y être clippée à l'aide de deux branches sensiblement parallèles. La goupille de verrouillage est introduite dans l'agrafe, entre les branches, au travers d'une lumière afin d'empêcher le rapprochement des branches et bloquer l'agrafe en position clippée. Chaque branche comprend une première lame repoussée élastiquement vers le corps allongé de la goupille pour venir en prise avec un évidement du corps allongé, et une deuxième lame repoussée élastiquement vers l'extérieur par rapport à la goupille pour venir en prise avec la plaque et assurer le clippage de l'agrafe en prenant appui à l'arrière de la plaque en périphérie de l'ouverture. La première lame est raccordée à une extrémité à une base de l'agrafe et reliée, par son extrémité axialement opposée, à la deuxième lame correspondante par une zone recourbée selon un angle sensiblement égal à 180 degrés, élastiquement déformable, assurant une disposition sensiblement parallèle des lames avec interposition d'un décalage transversal.

Ce dispositif présente l'avantage, pour un démontage, de rendre facile le rapprochement des premières lames entre elles pour un retrait aisé de la goupille de verrouillage. Toutefois le démontage complet du dispositif reste complexe à réaliser dans la mesure où il n'est pas aisé, après le retrait de la goupille, de rapprocher les deuxièmes lames entre elles pour les dégager hors de l'ouverture de la plaque de support. Il en résulte que l'agrafe est difficilement démontable sans risque de détérioration. D'autre part, la fiabilité du maintien de l'élément d'assemblage, et donc de l'accessoire, n'est pas totale car il existe une possibilité matérielle que les deuxièmes lames de l'agrafe se rapprochent entre elles fortuitement, par exemple dans le cas d'un effort axial de tirage trop important appliqué à l'élément d'assemblage.

### Objet de l'invention

L'objet de l'invention consiste à réaliser un dispositif de fixation qui puisse être démonté facilement et sans aucune détérioration.

Le dispositif selon l'invention est remarquable en ce que chaque lame comporte un organe d'accrochage et en ce que le corps allongé de la goupille est doté de moyens de rapprochement des deux organes d'accrochage automatiquement commandés par l'action de retrait de la goupille depuis l'agrafe.

Dans un dispositif d'assemblage selon l'invention, le rapprochement des lames assurant le clippage de l'agrafe sur la plaque de support est automatiquement commandés par l'opération de retrait de la goupille de verrouillage. Le démontage de l'agrafe par rapport à la plaque de support est possible sans risque de détérioration, par simple levage de l'agrafe, en même temsp que la goupille de verrouillage est retirée de l'agrafe.

Dans un mode de réalisation préférentiel, à proximité de son extrémité opposée à la tête, le corps allongé comporte deux évidements décalés transversalement et chacun délimité du côté opposé à la tête par une rampe transversale inclinée tournée vers la tête, les rampes transversales étant convergentes du côté opposé à la tête, et chaque organe d'accrochage est dirigé transversalement pour venir automatiquement en prise dans un évidement correspondant du corps allongé pendant l'insertion de la goupille entre les branches de l'agrafe, de sorte que tout retrait axial ultérieur de la goupille provoquant un rapprochement des lames suffisant pour une mise hors de prise de celles-ci par rapport à la plaque de support.

Selon un mode de réalisation avantageux, le corps allongé de la goupille comporte des moyens d'immobilisation par rapport à l'agrafe dans une position d'insertion maximale et chaque évidement est délimité du côté de la tête par un appui incliné tourné du côté opposé à la tête, les appuis inclinés étant convergents du côté opposé à la tête et axialement positionnés de sorte que l'insertion de la goupille jusqu'à la position d'insertion maximale provoque un contact entre les appuis inclinés et les organes d'accrochage provoquant un écartement des lames.

La combinaison des moyens d'immobilisation et des appuis inclinés assure un maintien excellent de l'accessoire.

D'autres caractéristiques techniques peuvent être utilisées isolément ou en combinaison :
- chaque branche comporte une aile raccordée à une extrémité à la base et reliée, par son extrémité axialement opposée, à la lame correspondante par une zone recourbée selon un angle sensiblement égal à 180 degrés, élastiquement déformable, assurant une disposition sensiblement parallèle de la lame par rapport à l'aile avec interposition d'un décalage transversal,
- les moyens d'immobilisation sont constitués par au moins un cran d'indexation coopérant automatiquement, en position d'insertion maximale, avec une patte de retenue portée par l'agrafe,
- chaque appui incliné comporte une saillie,
- l'extrémité du corps allongé opposée à la tête présente une partie en pointe tournée du côté opposé à la tête et délimitée par les rampes transversales.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 est une vue en perspective de l'agrafe d'un premier exemple de dispositif de fixation selon l'invention,
- la figure 2 est une vue en perspective de la goupille de verrouillage du premier exemple de dispositif selon l'invention,
- la figure 3 illustre les différentes phases lors du montage d'un accessoire sur une plaque de support avec un deuxième exemple de dispositif de fixation selon l'invention,
- la figure 4 illustre les différentes phases lors du démontage de l'accessoire de la figure 3.

### Description d'un mode préférentiel de l'invention

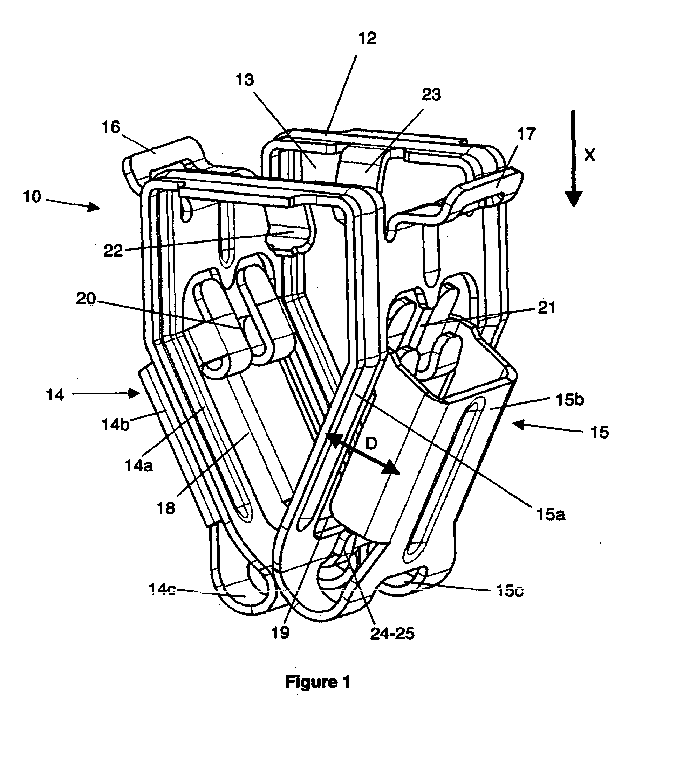

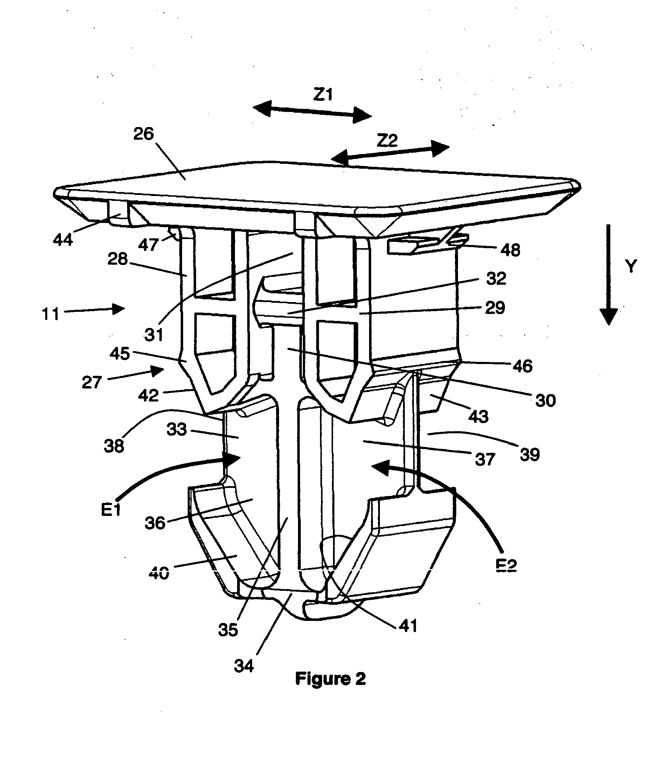

Le premier exemple de dispositif de fixation selon l'invention, représenté sur les figures 1 et 2, comporte d'une part une agrafe 10 illustrée sur la figure 1 et d'autre part une goupille de verrouillage 11 visible sur la figure 2.

L'agrafe 10 présente une forme générale de U avec une base 12 rectangulaire munie d'une lumière 13 et deux branches 14, 15 sensiblement parallèles. Chaque branche 14, 15 comprend une aile portant l'indice « a » connectée à une extrémité à la base 12, et reliée, par son extrémité opposée dans une direction axiale X, à une lame portant l'indice « b ». La direction axiale X correspond à la direction principale des branches 14, 15. Pour chaque branche 14, 15, la jonction entre l'aile 14a, 15a et la lame 14b, 15b est constituée par une zone recourbée selon un angle sensiblement égal à 180 degrés, élastiquement déformable, assurant, dans une configuration naturelle, une disposition sensiblement parallèle de la lame 14b, 15b par rapport à l'aile 14a, 15a, avec toutefois l'interposition d'un décalage transversal repéré D. La notion de transversale correspond à l'ensemble des directions perpendiculaires à la direction axiale X.

La zone recourbée élastiquement déformable reliant la lame 14b à l'aile 14a est repérée 14c, tandis que l'autre zone recourbée élastiquement déformable est notée 15c. De telles zones recourbées 14c, 15c autorisent une possibilité d'un débattement transversal bidirectionnel des lames correspondantes par rapport à leur configuration naturelle. Sous l'effet d'efforts extérieurs, chaque lame 14b, 15b peut donc s'approcher, dans la direction transversale, de la branche 14, 15 opposée transversalement, tout en étant élastiquement repoussée par la zone déformable 14c, 15c associée, dans la même direction mais du côté opposé à la branche 14, 15 opposée. À l'inverse, chaque lame 14b, 15b peut s'éloigner, dans la direction transversale, de la branche 14, 15 opposée tout en étant élastiquement repoussée du côté de la branche opposée, dans la même direction, par la zone déformable 14c, 15c associée. Chaque lame 14b, 15b comporte une nervure de rigidification orientée axialement.

Aux jonctions avec les branches 14, 15, la base 12 est équipée d'ailettes 16, 17 faisant saillie transversalement à l'extérieur de la base 12. Comme détaillé plus loin, les ailettes 16, 17 sont destinées à s'engager dans des moyens de clippage portés par l'élément d'assemblage de l'accessoire à fixer, lesdites ailettes 16, 17 formant ainsi des moyens de retenue de l'élément d'assemblage.

Chaque aile 14a, 15a est dotée d'une lumière traversante, respectivement repérée 18, 19, agencée sur une grande partie de la longueur de l'aile 14a, 15a considérée dans la direction axiale X. Conjointement, chaque lame 14b, 15b comporte un organe d'accrochage 20, 21 dirigé transversalement en direction de la branche 14, 15 opposée et positionné axialement le long de la lame 14b, 15b de manière à être susceptible de traverser la lumière traversante 18, 19 de l'aile 14a, 15a directement en regard. La longueur de chaque organe d'accrochage 20, 21 est supérieure au décalage D, de manière que dans la configuration naturelle, l'organe d'accrochage 20, 21 fait saillie transversalement depuis l'aile 14a, 15a directement en regard, au travers de la lumière traversante 18, 19 correspondante. À titre d'exemple, chaque organe d'accrochage 20, 21 comporte deux pattes en forme de U, ouvertes en direction de la base 12, et disposées parallèlement dans des plans transversaux. Sur la figure 1, le flanc interne de la patte en U, c'est-à-dire le flanc disposé du côté de la branche 14, 15 opposée, présente une longueur supérieure à la longueur du flanc externe de la patte. Les pattes peuvent être maintenues à l'aide de nervures depuis la lame 14b, 15b correspondante pour une meilleure résistance mécanique de l'agrafe 10. La liaison entre les flancs interne et externe est arrondie extérieurement.

Dans le plan de symétrie des branches 14, 15, l'agrafe 10 comporte en outre deux pattes de retenue 22, 23 portées par les bords longitudinaux opposés de la lumière 13 et dirigées axialement en direction de l'espace entre les branches 14, 15. Chaque patte de retenue 22, 23 comporte, à son extrémité libre, un bec replié à 90 degrés en formant un arrondi.

Dans la partie de l'agrafe 10 opposée à la base 12, les branches 14, 15 se rejoignent selon un contact sensiblement linéique. Ce contact est rigidifié par un crochet 24, 25 porté par chaque branche 14, 15 et en prise avec l'autre branche 14, 15. Pour ce faire, les crochets 24, 25 pénètrent dans des lumières d'accrochage prévues à proximité des zones recourbées 14c, 15c.

À titre d'exemple, l'agrafe 10 est réalisée par découpage, pliage et cambrage d'un feuillard métallique de faible épaisseur. Il est toutefois possible de la réaliser par injection d'une matière plastique dans un moule d'injection.

En complément de l'agrafe 10, le dispositif de fixation comporte la goupille de verrouillage 11 de la figure 2, ayant une tête 26 plane de forme extérieure rectangulaire, en tous les cas de forme complémentaire de l'ouverture de l'élément d'assemblage de l'accessoire, pour une bonne finition esthétique. La goupille 11 comporte de plus un corps allongé 27 s'étendant perpendiculairement depuis la face inférieure de la tête 26, selon une direction axiale Y de la goupille 11. Dans la partie adjacente à la tête 26, le corps allongé 27 comporte un premier tronçon se composant principalement de deux jambes 28, 29 parallèles décalées dans une première direction transversale Z1 de la goupille 11, avec chacune une section rectangulaire. La notion de transversale correspond à l'ensemble des directions perpendiculaires à la direction axiale Y. Un voile de raccordement 30 relie les jambes 28, 29 entre elles à l'opposé de la tête 26, en délimitant avec cette dernière une ouverture transversale 31. Le voile de raccordement 30 comporte en saillie deux crans d'indexation 32 décalés dans une direction transversale Z2 perpendiculaire à la direction Z1. L'encombrement du premier tronçon du corps allongé 27 est légèrement inférieur aux dimensions de la lumière 13 de la base 12.

À l'opposé de la tête 26, le premier tronçon se prolonge axialement par un deuxième tronçon qui se compose d'une âme centrale 33 disposée dans le plan incluant la direction axiale Y et la direction transversale Z1. À l'opposé du premier tronçon, l'âme centrale 33 se prolonge axialement par une partie en pointe 34 tournée du côté opposé à la tête 26, formant l'extrémité du corps allongé 27 opposée à la tête 26.

Sur chacune de ses faces, l'âme centrale 33 est renforcée par des nervures axiales 35 disposées dans un plan incluant la direction axiale Y et la direction transversale Z2. L'âme centrale 33, les jambes 28, 29, les nervures axiales 35 et la partie en pointe 34 délimitent deux paires de cavités 36 à 39. D'un côté de l'âme centrale 33, les cavités 36 et 37 d'une première paire sont décalées transversalement dans la direction Z1. De l'autre côté de l'âme centrale 33, les cavités 38 et 39 d'une deuxième paire sont décalées transversalement dans la direction Z1. Au sein d'une même paire, les cavités sont délimitées par une nervure axiale 35. D'un côté du plan incluant la direction axiale Y et la direction Z2, la réunion fictive des cavités 36 et 38 constitue un premier évidement E1. De l'autre côté du plan incluant la direction axiale Y et la direction Z2, la réunion fictive des cavités 37 et 39 constitue un deuxième évidement E2.

De ce qui précède, il résulte qu'à proximité de son extrémité opposée à la tête 26, le corps allongé 27 comporte deux évidements E1, E2 décalés transversalement dans la direction Z1. Chaque évidement E1, E2 est délimité du côté opposé à la tête 26 par une rampe transversale 40, 41 inclinée, tournée vers la tête 26. Les rampes transversales 40, 41 sont inclinées de manière à être convergentes du côté opposé à la tête 26. La partie en pointe 34 est délimitée axialement par les rampes transversales 40, 41.

Chaque évidement E1, E2 est délimité du côté de la tête 26 par un appui incliné 42, 43 tourné du côté opposé à la tête 26, les appuis inclinés 42, 43 étant convergents du côté opposé à la tête 26. Les appuis inclinés 42, 43 constituent les extrémités des jambes 28, 29 opposées à la tête 26. Chaque appui incliné 42, 43 comporte une saillie 45, 46, par exemple en forme de godron disposé dans la direction transversale Z2. Comme détaillé plus loin, les appuis inclinés 42, 43 sont axialement positionnés de sorte que l'insertion de la goupille 11 jusqu'à une position d'insertion maximale dans l'agrafe 10 provoque un contact entre les appuis inclinés 42, 43 et les organes d'accrochage 20, 21 provoquant un écartement des lames 14b, 15b depuis leur configuration naturelle.

La tranche de la tête 26 est biseautée sur tout le contour de la tête 26, à l'exception de butées axiales 44. D'autre part, des renforts 47, 48 sont placés entre chaque jambe 28, 29 et la tête 26.

La goupille de verrouillage 11 peut par exemple être réalisée de manière monobloc, en matière plastique de préférence, injectée dans un moule de fabrication. Toutefois, la matière utilisée pourrait être de type métallique.

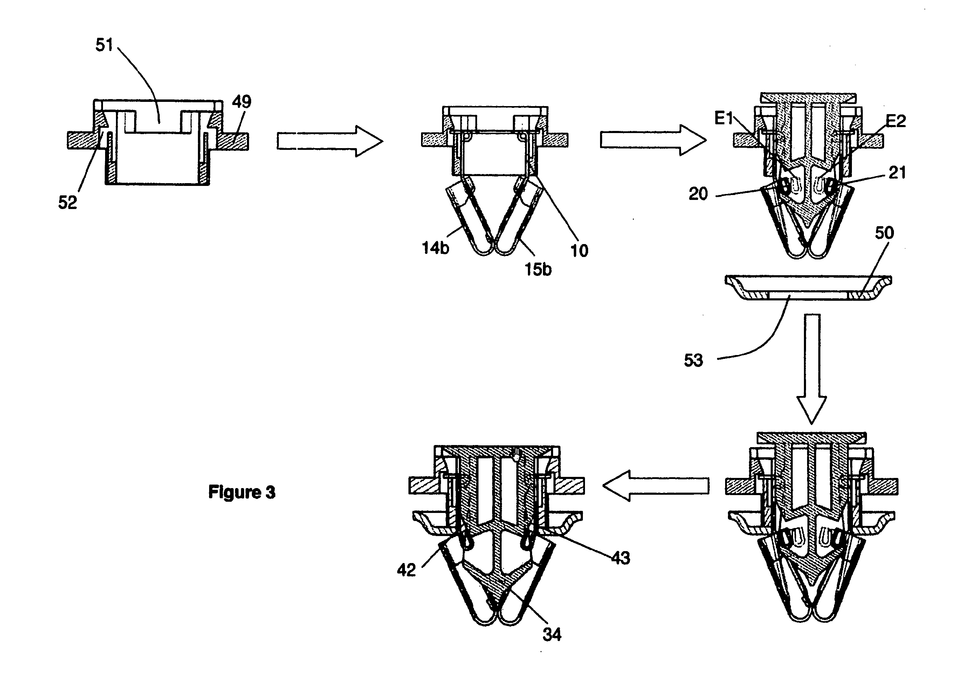

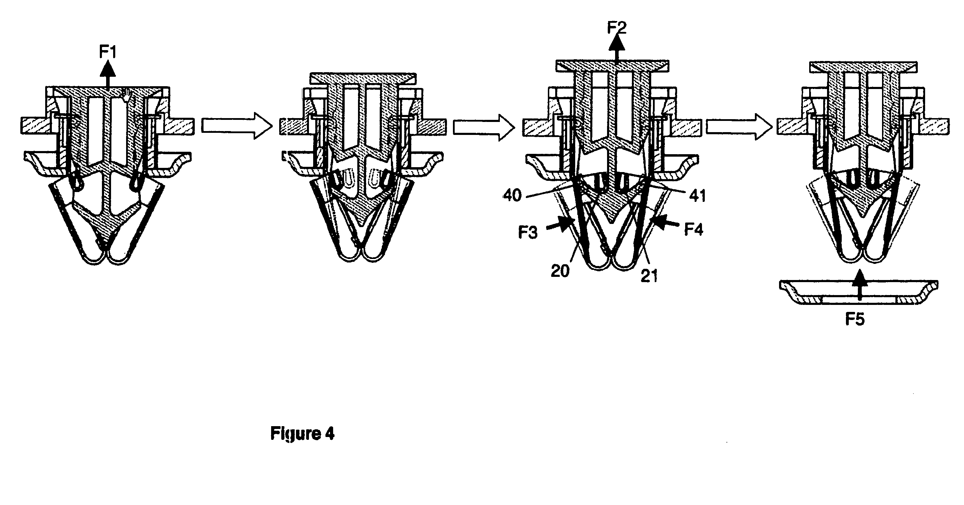

Le fonctionnement d'un dispositif de fixation sera expliqué en relation avec un deuxième exemple de dispositif selon l'invention. Le deuxième exemple de dispositif, représenté sur les figures 3 et 4 dans son utilisation particulière en aucun cas limitative au montage d'une poignée de maintien sur le pavillon de toit d'un véhicule automobile, comporte une agrafe et une goupille de verrouillage identiquement au dispositif des figures 1 et 2. Le dispositif des figures 3 et 4 se différentie de celui des figures 1 et 2 par le fait que :
- les butées axiales 44 sont supprimées,
- les saillies 45, 46 sont supprimées,
- l'ouverture transversale 31 est supprimée,
- le flanc interne de la patte en U des organes d'accrochage présente une longueur supérieure à la longueur du flanc externe de la patte.

Le montage d'un élément d'assemblage 49 d'un accessoire consistant par exemple en une poignée de maintien (non illustrée en entier) à fixer dans une plaque de support 50 formée par le pavillon de toit d'un véhicule automobile, se pratique (figure 3) en introduisant l'agrafe 10 dans une ouverture 51 aménagée dans l'élément d'assemblage 49, jusqu'à engager les ailettes 16, 17 dans des moyens de clippage portés par l'élément d'assemblage 49. Après clippage, les ailettes 16, 17 assurent la retenue de l'élément d'assemblage dans une configuration relative telle que l'ouverture 51 de l'élément d'assemblage 49 est placée au droit de la lumière 13 de la base 12. D'autres ailettes peuvent également être prévues sur les bords longitudinaux de la base 12, éventuellement dans un plan transversal axialement décalé par rapport au plan des ailettes 16, 17, pour assurer l'appui sur l'élément d'assemblage 49.

Puis la goupille de verrouillage 11 est insérée axialement au travers de l'ouverture 51, au travers de la lumière 13, et entre les branches 14, 15 de l'agrafe 10 jusqu'à mettre en contact la partie en pointe 34 contre les flancs internes des organes d'accrochage 20, 21. L'introduction de la goupille 11 est réalisée en faisant coïncider les directions axiales X et Y et en orientant la direction transversale Z1 en concordance avec la direction transversale de l'agrafe 10 suivant laquelle les organes d'accrochage 20, 21 sont décalés. Il est clair que rendre insérable la goupille 11 entre les branches 14, 15 de l'agrafe 10 au travers de la lumière 13, les dimensions de l'ouverture 51 et de la lumière 13 doivent être légèrement supérieures à celles de la partie en pointe 34 et de l'encombrement du premier tronçon du corps allongé 27.

Puis l'insertion axiale de la goupille 11 est prolongée. La partie en pointe glisse alors le long des flancs intérieurs et des arrondis des pattes en U des organes d'accrochage 20, 21, provoquant conjointement un écartement transversal des lames 14b, 15b depuis leur configuration naturelle. L'écartement se prolonge jusqu'à l'engagement complet de la partie en pointe 34 dans l'espace délimité par les ailes 14a, 15a des branches 14a, 15a. Par retour élastique sous l'action des zones recourbées 14c, 15c, les lames 14b, 15b reviennent alors dans leur configuration naturelle, ce mouvement des lames 14b, 15b s'accompagnant de l'engagement d'un organe d'accrochage 20, 21 dans l'un des évidements E1, E2. Autrement dit, les organes d'accrochage 20, 21 viennent automatiquement en prise dans un évidement E1, E2 correspondant du corps allongé 27 pendant l'insertion de la goupille entre les branches 14, 15 de l'agrafe 10.

Depuis cette configuration obtenue après une introduction partielle de la goupille de verrouillage 11 entre les branches 14, 15 de l'agrafe 10, tout retrait axial ultérieur de la goupille 11 par rapport à l'agrafe 10 provoque un rapprochement des lames 14b, 15b. Ce mouvement des lames 14b, 15b est commandé par le mouvement de retrait axial de la goupille par l'intermédiaire des rampes transversales 40, 41 avantageusement convergentes du côté opposé à la tête 26. Il en résulte que les rampes transversales 40, 41 forment des moyens de rapprochement des deux organes d'accrochage 20, 21 automatiquement commandés par l'action de retrait de la goupille 11 depuis l'agrafe 10.

L'ensemble formé par l'agrafe 10 en position de retenue de l'élément d'assemblage 49 et par la goupille de verrouillage 11 partiellement insérée dans l'agrafe 10, est ensuite introduit dans une ouverture 53 de la plaque de support 50, en commençant par les branches 14, 15. La mise en place se pratique en appuyant sur l'élément d'assemblage 49 en non pas sur la tête 26 de la goupille 11. Les dimensions de l'ouverture 53 sont inférieures à la distance séparant les extrémités des lames 14b, 15b opposées aux zones recourbées 14c, 15c. Cette disposition structurelle implique que le mouvement axial de l'ensemble dans l'ouverture 53 provoque un glissement des lames 14b, 15b le long de l'ouverture 53 conjointement à un rapprochement des lames 14b, 15b depuis leur configuration naturelle. L'engagement axial des branches 14, 15 dans l'ouverture 53 de la plaque de support 50 et le rapprochement des lames 14b, 15b se poursuivent jusqu'à une position de la plaque de support 50 entre l'élément d'assemblage 49 et les extrémités des lames 14b, 15b opposées aux zones recourbées 14c, 15c. Par retour élastique sous l'action des zones recourbées 14c, 15c, chaque lame 14b, 15b est alors élastiquement repoussée transversalement du côté opposé à la branche opposée 14, 15 pour venir en prise avec la plaque de support 50 et assurer un clippage de l'agrafe 10. Pour cela, les lames 14b, 15b reviennent dans leur configuration naturelle, plaçant les extrémités des lames 14b, 15b sous la plaque de support 50. Les extrémités des lames 14b, 15b assurent un maintien positif de la plaque de support 50 contre l'élément d'assemblage 49, en vue de la fixation de l'élément d'assemblage 49 sur la plaque de support 50.

Pour finaliser la fixation, l'insertion de la goupille 11 est poursuivie jusqu'à mettre en contact les appuis inclinés 42, 43 contre les flancs internes des organes d'accrochage 20, 21. Puis l'insertion est prolongée, le mouvement axial de la goupille s'accompagnant d'un écartement progressif des lames 14b, 15b entre elles depuis leur configuration naturelle, tandis que les organes d'accrochage 20, 21 glissent le long des appuis inclinés 42, 43. Il en résulte un renforcement du maintien positif de la plaque de support 50. L'insertion de la goupille 11 se termine dans une position d'insertion maximale dans laquelle la partie en pointe 34 est en appui contre les ailes 14a, 15b des branches 14, 15, et les crans d'indexation 32 sont axialement passés au-delà des pattes de retenue 22, 23. Le contact entre les appuis inclinés 42, 43 et les organes d'accrochage 20, 21, associé au contact entre la partie en pointe 34 et les ailes 14a, 15a des branches 14, 15 empêchent le rapprochement des branches 14, 15 et bloque l'agrafe 10 en position clippée.

Ainsi, les crans d'indexation 32, portés par le corps allongé 27 de la goupille 11 et coopérant automatiquement avec les pattes de retenue 22, 23 en position maximale d'insertion, constituent des moyens d'immobilisation par rapport à l'agrafe 10 dans la position d'insertion maximale. Les becs des pattes 22, 23 repliés à 90 degrés en formant un arrondi facilitent la mise en place des crans d'indexation 32 sous les pattes de retenue 22, 23. D'autre part, l'âme centrale 33 permet de guider la goupille 11 dans ses différents mouvements axiaux.

Dans le cas du premier exemple des figures 1 et 2, les saillies 45, 46 ont pour effet d'intensifier l'écartement des lames 14b, 15b en position d'insertion maximale de la goupille 11 pour un meilleur maintien de la plaque de support 50. Les butées axiales 44 viennent en contact avec les bords de l'ouverture 51 de l'élément d'assemblage 49 en position d'insertion maximale pour bloquer la translation axiale de la goupille 11 par rapport à la plaque 50. Le flanc interne rallongé de la patte en U des organes d'accrochage 20, 21 permet la coopération avec les saillies 45, 46 et participe donc également au renforcement du maintien de la plaque de support 50.

Le démontage est réalisé en référence à la figure 4, en commençant par soulever axialement la tête 26 (et donc le corps allongé 27) selon la flèche F1. Pour cela, il convient d'introduire la pointe d'un outil, par exemple un tournevis plat, dans un accès prévu grâce à la tranche en biseau de la tête 26. En se servant de l'outil comme levier, les pattes de retenue 22, 23 sont écartées (grâce à leur forme arrondie) de manière à libérer les crans d'indexation 32. Le retrait de la goupille 11 s'accompagne du rapprochement transversal des lames 14b, 15b entre elles car les appuis inclinés 42, 43 se retirent axialement de manière progressive. Par retour élastique sous l'action des zones recourbées 14c, 15c, les lames 14b, 15b reviennent alors dans leur configuration naturelle, ce mouvement des lames 14b, 15b s'accompagnant de l'engagement d'un organe d'accrochage 20, 21 dans l'un des évidements E1, E2. Autrement dit, les organes d'accrochage 20, 21 viennent automatiquement en prise dans un évidement E1, E2 correspondant du corps allongé 27 pendant le retrait de la goupille 11 entre les branches 14, 15 de l'agrafe 10.

Le dispositif de fixation se trouve alors à nouveau dans une configuration où tout retrait axial ultérieur (flèche F2) de la goupille 11 par rapport à l'agrafe 10 provoque un rapprochement des lames 14b, 15b. Ce mouvement des lames 14b, 15b (flèches F3 et F4 respectivement) est automatiquement commandé par le mouvement de retrait axial de la goupille 11 par l'intermédiaire des rampes transversales 40, 41 avantageusement convergentes du côté opposé à la tête 26. Les dimensions et les angles d'inclinaison des différentes parties du dispositif de fixation qui interviennent dans ce mécanisme de retrait sont choisies pour que le rapprochement des lames 14b, 15b soit suffisant pour une mise hors de prise de celles-ci par rapport à la plaque de support 50.

Pour finaliser le démontage, il suffit alors de retirer axialement (flèche F5) depuis la plaque de support 50 l'ensemble formé par l'agrafe 10 en position de retenue de l'élément d'assemblage 49 et par la goupille de verrouillage 11 partiellement retirée de l'agrafe 10. Par la suite le dispositif de fixation reste solidaire de l'élément d'assemblage 49.

Dans le cas du premier exemple des figures 1 et 2, l'ouverture transversale 31 permet de recevoir un outil de démontage, par exemple un tournevis, et ainsi de faciliter la transmission à la goupille 11 d'un effort de retrait suffisant pour une mise hors de prise des lames 14b, 15b depuis la plaque de support 50.

En complément, il est possible d'aménager à l'intérieur de chaque jambe 28, 29 une cavité axialement positionnée de manière adjacente à l'appui incliné 42, 43 porté extérieurement par cette jambe 28, 29. Une telle cavité a pour effet de conférer à l'appui incliné 42, 43, et éventuellement à la saillie 45, 46 correspondante, une capacité de déformation transversale en direction de l'intérieur de la cavité adjacente. Une telle possibilité de déformation permet d'insérer la goupille de verrouillage 11 jusqu'à la position maximale d'insertion indépendamment de l'épaisseur de la plaque de support 50. Les variations de l'épaisseur de la plaque de support 50 sont compensées par des déformations transversales des appuis inclinés 42, 43.

## Revendications

1. Dispositif de fixation d'un élément d'assemblage (49) d'un accessoire sur une plaque de support (50), comprenant :
- une agrafe (10) en forme de U avec une base (12) munie d'une lumière (13) et deux branches (14, 15) sensiblement parallèles, ladite agrafe (10) comportant des moyens de retenue (16, 17) de l'élément d'assemblage (49) et chaque branche (14, 15) comprenant une lame (14b, 15b) élastiquement repoussée dans une direction transversale du côté opposé à la branche opposée (14, 15), après un engagement axial des branches (14, 15) dans une ouverture (53) de la plaque de support (50), pour venir en prise avec la plaque de support (50) et assurer un clippage de l'agrafe (10),
- et une goupille de verrouillage (11) ayant une tête (26) et un corps allongé (27) insérable axialement entre les branches (14, 15) de l'agrafe (10) au travers de la lumière (13), pour empêcher le rapprochement des branches (14, 15) et bloquer l'agrafe (10) en position clippée,
**caractérisé en ce que** chaque lame (14b, 15b) comporte un organe d'accrochage (20, 21) **et en ce que** le corps allongé (27) de la goupille (11) est doté de moyens de rapprochement des deux organes d'accrochage (20, 21) automatiquement commandés par l'action de retrait de la goupille (11) depuis l'agrafe (10).

2. Dispositif selon la revendication 1, **caractérisé en ce qu'**à proximité de son extrémité opposée à la tête (26), le corps allongé (27) comporte deux évidements (E1, E2) décalés transversalement et chacun délimité du côté opposé à la tête (26) par une rampe transversale (40, 41) inclinée tournée vers la tête (26), les rampes transversales (40, 41) étant convergentes du côté opposé à la tête (26), et **en ce que** chaque organe d'accrochage (20, 21) est dirigé transversalement pour venir automatiquement en prise dans un évidement (E1, E2) correspondant du corps allongé (27) pendant l'insertion de la goupille (11) entre les branches (14, 15) de l'agrafe (10), tout retrait axial ultérieur de la goupille (11) provoquant un rapprochement des lames (14b, 15b) suffisant pour une mise hors de prise de celles-ci par rapport à la plaque de support (50).

3. Dispositif selon l'une des revendications 1 et 2, **caractérisé en ce que** chaque branche (14, 15) comporte une aile (14a, 15a) raccordée à une extrémité à la base (12) et reliée, par son extrémité axialement opposée, à la lame (14b, 15b) correspondante par une zone recourbée (14c, 15c) selon un angle sensiblement égal à 180 degrés, élastiquement déformable, assurant une disposition sensiblement parallèle de la lame (14b, 15b) par rapport à l'aile (14a, 15a) avec interposition d'un décalage transversal (D).

4. Dispositif selon l'une des revendications 1 à 3, **caractérisé en ce que** le corps allongé (27) de la goupille (11) comporte des moyens d'immobilisation par rapport à l'agrafe (10) dans une position d'insertion maximale.

5. Dispositif selon la revendication 4, **caractérisé en ce que** les moyens d'immobilisation sont constitués par au moins un cran d'indexation (32) coopérant automatiquement, en position d'insertion maximale, avec une patte de retenue (22, 23) portée par l'agrafe (10).

6. Dispositif selon l'une des revendications 4 et 5, **caractérisé en ce que** chaque évidement (E1, E2) est délimité du côté de la tête (26) par un appui incliné (42, 43) tourné du côté opposé à la tête (26), les appuis inclinés (42, 43) étant convergents du côté opposé à la tête (26) et axialement positionnés de sorte que l'insertion de la goupille (11) jusqu'à la position d'insertion maximale provoque un contact entre les appuis inclinés (42, 43) et les organes d'accrochage (20, 21) provoquant un écartement des lames (14b, 15b).

7. Dispositif selon la revendication 6, **caractérisé en ce que** chaque appui incliné (42, 43) comporte une saillie (45, 46).

8. Dispositif selon l'une des revendications 2 à 7, **caractérisé en ce que** l'extrémité du corps allongé (27) opposée à la tête (26) présente une partie en pointe (34) tournée du côté opposé à la tête (26) et délimitée par les rampes transversales (40, 41).

9. Utilisation du dispositif selon l'une quelconque des revendications 1 à 8, pour le montage d'une poignée de maintien dans le pavillon de toit d'un véhicule automobile.

## Patentansprüche

1. Vorrichtung zum Befestigen eines Verbindungselements (49) für ein Anbauteil auf eine Trägerplatte (50), die
- eine U-förmige Klammer (10) mit einer Basis (12), die eine Freimachung (13) und zwei im Wesentlichen parallele Schenkel (14, 15) aufweist, wobei die Klammer (10) über Rückhaltemittel (16, 17) des Verbindungselements (49) verfügt und wobei jeder Schenkel (14, 15) eine Zunge (14b, 15b) aufweist, die nach einem axialen Eingriff der Schenkel (14, 15) in eine Öffnung (53) der Trägerplatte (50) elastisch in eine Querrichtung zu der dem gegenüberliegenden Schenkel (14, 15) gegenüberliegenden Seite zurückgedrückt ist, um mit der Trägerplatte (50) in Eingriff zu kommen und ein Einrasten der Klammer (10) sicherzustellen,
- und einen Verriegelungsstift (11) aufweist, der über einen Kopf (26) und über einen länglichen Körper (27) verfügt, der axial zwischen den Schenkeln (14, 15) der Klammer (10) durch die Freimachung (13) einfügbar ist, um ein Annähern der Schenkel (14, 15) zu verhindern und die Klammer (10) in der eingerasteten Stellung zu halten,
**dadurch gekennzeichnet, dass** jede Zunge (14b, 15b) ein Befestigungsteil (20, 21) aufweist und dass der längliche Körper (27) des Stifts (11) mit Mitteln zur Annäherung der zwei Befestigungsteile (20, 21) versehen ist, die automatisch durch das Zurückziehen des Stifts (11) von der Klammer (10) betätigt sind.

2. Vorrichtung nach Anspruch 1, **dadurch gekennzeichnet, dass** der längliche Körper (27) in der Nähe seines dem Kopf (26) gegenüberliegenden Endes zwei Aussparungen (E1, E2) aufweist, die quer versetzt und jeweils auf der dem Kopf (26) gegenüberliegenden Seite durch eine schräg gestellte, dem Kopf (26) zugewandte Querrampe (40, 41) begrenzt sind, wobei die Querrampen (40, 41) auf der dem Kopf (26) gegenüberliegenden Seite konvergieren, und dass jedes Befestigungsteil (20, 21) quer ausgerichtet ist, um automatisch in einer zugehörigen Aussparung (E1, E2) des länglichen Körpers (27) während des Einführens des Stifts (11) zwischen die Schenkel (14, 15) der Klammer (10) in Eingriff zu kommen, wobei jedes spätere axiale Zurückziehen des Stifts (11) eine ausreichende Annäherung der Zungen (14b, 15b) bewirkt, um diese aus dem Eingriff mit der Trägerplatte (50) zu lösen.

3. Vorrichtung nach einem der Ansprüche 1 und 2, **dadurch gekennzeichnet, dass** jeder Schenkel (14, 15) einen Flügel (14a, 15a) aufweist, der an einem Ende an der Basis (12) angebracht und durch sein axial gegenüberliegendes Ende mit der zugehörigen Zunge (14b, 15b) durch einen gekrümmten, elastisch verformbaren Bereich (14c, 15c) in einem Winkel von im Wesentlichen 180 Grad verbunden ist, wodurch eine im Wesentlichen parallele Anordnung der Zunge (14b, 15b) in Bezug auf den Flügel (14a, 15a) mit einer dazwischenliegenden Querversetzung (D) sichergestellt ist.

4. Vorrichtung nach einem der Ansprüche 1 bis 3, **dadurch gekennzeichnet, dass** der längliche Körper (27) des Stifts (11) in Bezug auf die Klammer (10) Mittel zum Festlegen in einer maximalen Einfügestellung aufweist.

5. Vorrichtung nach Anspruch 4, **dadurch gekennzeichnet, dass** die Mittel zum Festlegen durch wenigstens eine Rastkerbe (32) gebildet sind, die in der maximalen Einfügestellung automatisch mit einer an der Klammer (10) vorhandenen Rückhaltelasche (22, 23) zusammenwirkt.

6. Vorrichtung nach einem der Ansprüche 4 und 5, **dadurch gekennzeichnet, dass** jede Aussparung (E1, E2) auf der Seite des Kopfs (26) durch einen schräg gestellten Anschlag (42, 43) begrenzt ist, der der dem Kopf (26) gegenüberliegenden Seite zugewandt ist, wobei die schräg gestellten Anschläge (42, 43) auf der dem Kopf (26) gegenüberliegenden Seite zusammenlaufen und axial so angeordnet sind, dass das Einfügen des Stifts (11) bis zur maximalen Einfügestellung einen Kontakt zwischen den schräg gestellten Anschlägen (42, 43) und den Befestigungsteilen (20, 21) herstellt, wodurch die Zungen (14b, 15b) voneinander beabstandet werden.

7. Vorrichtung nach Anspruch 6, **dadurch gekennzeichnet, dass** jeder schräg gestellte Anschlag (42, 43) einen Vorsprung (45, 46) aufweist.

8. Vorrichtung nach einem der Ansprüche 2 bis 7, **dadurch gekennzeichnet, dass** das dem Kopf (26) gegenüberliegende Ende des länglichen Körpers (27) ein Spitzenteil (34) aufweist, das der dem Kopf (26) gegenüberliegenden Seite zugewandt und durch die Querrampen (40, 41) begrenzt ist.

9. Verwendung einer Vorrichtung nach einem der Ansprüche 1 bis 8 für die Montage eines Haltegriffs im Verdeck des Dachs eines Automobils.

## Claims

1. Device for fixing an element (49) for assembling an accessory to a support plate (50), including:
- a U-shaped clip (10) with a base (12) including an aperture (13) and two substantially parallel branches (14, 15), said clip (10) including means (16, 17) for retaining the assembly element (49) and each branch (14, 15) including a blade (14b, 15b) elastically urged in a transverse direction away from the opposite branch (14, 15) after axial engagement of the branches (14, 15) in an opening (53) in the support plate (50) so as to come into interengagement with the support plate (50) and clip the clip (10), and
- a locking pin (11) including a head (26) and an elongate body (27) adapted to be inserted axially between the branches (14, 15) of the clip (10) through the aperture (13) to prevent the branches (14, 15) from moving toward each other and to lock the clip (10) in a clipped position,
**characterized in that** each blade (14b, 15b) includes an attachment member (20, 21) and the elongate body (27) of the pin (11) includes means for moving the two attachment members (20, 21) toward each other actuated automatically by the action of withdrawing the pin (11) from the clip (10).

2. Device according to claim 1, **characterized in that** the elongate body (27) includes near the end opposite the head (26) two transversely offset recesses (E1, E2) each delimited on the side opposite the head (26) by an inclined ramp (40, 41) facing toward the head (26), the transverse ramps (40, 41) converging in the direction away from the head (26), and each attachment member (20, 21) is disposed transversely so as to come automatically into interengagement with a corresponding recess (E1, E2) of the elongate body (27) during insertion of the pin (11) between the branches (14, 15) of the clip (10), any subsequent axial withdrawal of the pin (11) causing the blades (14b, 15b) to move toward each other enough to disengage them from the support plate (50).

3. Device according to either of claims 1 and 2, **characterized in that** each branch (14, 15) includes a wing (14a, 15a) connected at one end to the base (12) and by its axially opposite end to the corresponding blade (14b, 15b) via an elastically deformable curved area (14c, 15c) subtending an angle substantially equal to 180 degrees ensuring a substantially parallel arrangement of the blade (14b, 15b) relative to the wing (14a, 15a) with a transverse offset (D) between them.

4. Device according to any one of claims 1 to 3, **characterized in that** the elongate body (27) of the pin (11) includes means for immobilizing it relative to the clip (10) in a maximum insertion position.

5. Device according to claim 4, **characterized in that** the immobilizing means are constituted by at least one indexing detent (32) automatically cooperating in a maximum insertion position with a retaining lug (22, 23) carried by the clip (10).

6. Device according to either of claims 4 and 5, **characterized in that** each recess (E1, E2) is delimited on the same side as the head (26) by an inclined bearing surface (42, 43) facing away from the head (26), the inclined bearing surfaces (42, 43) converging in the direction away from the head (26) and being axially positioned so that insertion of the pin (11) as far as the maximum insertion position causes contact between the inclined bearing surfaces (42, 43) and attachment members (20, 21) causing spreading of the blades (14b, 15b).

7. Device according to claim 6, **characterized in that** each inclined bearing surface (42, 43) includes a protrusion (45, 46).

8. Device according to any one of claims 2 to 7, **characterized in that** the end of the elongate body (27) opposite the head (26) includes a pointed part (34) facing away from the head (26) and delimited by transverse ramps (40, 41).

9. Use of the device according to any one of claims 1 to 8 for mounting a holding handle in the roof of a motor vehicle.
